(19)

**Europäisches Patentamt**
**European Patent Office**
**Office européen des brevets**

(11) **EP 3 818 756 B1**

(12) **EUROPEAN PATENT SPECIFICATION**

(45) Date of publication and mention
of the grant of the patent:
**31.12.2025   Bulletin 2026/01**

(21) Application number: **18740532.9**

(22) Date of filing: **04.07.2018**

(51) International Patent Classification (IPC):
**H04W 64/00** (2009.01)      **G01S 5/02** (2010.01)
**G01S 11/06** (2006.01)      **H04W 4/02** (2018.01)

(52) Cooperative Patent Classification (CPC):
**H04W 64/00; G01S 5/0242; G01S 5/02524;**
**G01S 5/0284; G01S 11/06; H04W 4/023;**
**H04W 4/025**

(86) International application number:
**PCT/EP2018/068132**

(87) International publication number:
**WO 2020/007462 (09.01.2020 Gazette 2020/02)**

(54) **RADIO NODE LOCALIZATION AND CLUSTERING FOR IMPROVED DEVICE LOCALIZATION**

FUNKKNOTENLOKALISIERUNG UND -GRUPPIERUNG FÜR VERBESSERTE
VORRICHTUNGSLOKALISIERUNG

LOCALISATION ET GROUPEMENT DE NOEUDS RADIO POUR UNE LOCALISATION DE
DISPOSITIF AMÉLIORÉE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**12.05.2021   Bulletin 2021/19**

(73) Proprietor: **HERE Global B.V.**
**5611 ZT Eindhoven (NL)**

(72) Inventors:
• **IVANOV, Pavel**
  **33100 Tampere (FI)**
• **WIROLA, Lauri Aarne Johannes**
  **33100 Tampere (FI)**
• **NURMINEN, Henri Jaakko Julius**
  **33100 Tampere (FI)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
WO-A2-2017/078181      US-A1- 2016 021 494
US-A1- 2017 272 911      US-A1- 2018 123 708

• **HAZEM SALLOUHA ET AL: "Localization in**
  **Long-range Ultra Narrow Band IoT Networks**
  **using RSSI", ARXIV.ORG, CORNELL**
  **UNIVERSITY LIBRARY, 201 OLIN LIBRARY**
  **CORNELL UNIVERSITY ITHACA, NY 14853, 7**
  **March 2017 (2017-03-07), XP080754909, DOI:**
  **10.1109/ICC.2017.7997195**

## EP 3 818 756 B1

**Description**

**BACKGROUND**

Modern global cellular (GSM (Global System for Mobile Communications), CDMA (Code Division Multiple Access), WDCMA (Wideband CDMA), TD-SCDMA (Time Division Synchronous CDMA), LTE (Longterm Evolution), LET-A, NB-IoT (NarrowBand-Internet-of-Things)) and non-cellular (primarily WLAN (Wireless Local Area Network), but also BT (Bluetooth), BLE (Bluetooth Low Energy), ZigBee, Lora, to name but a few non-limiting examples) positioning technologies are based on collecting large global databases containing information on the cellular and non-cellular signals. A large portion of the data typically originates from the users of these positioning technologies.

The data from the users is typically in the form of fingerprints respectively fingerprint information. Such fingerprints contain GNSS (Global Navigation Satellite System)-based or WLAN-based location estimate and measurements taken from the radio interfaces (cellular, non-cellular).

The measurements contain e.g.

- Global and/or Local IDs of the cellular network cells observed, and, optionally,

    - signal strength and/or pathloss estimates;
    - timing measurements (Timing Advance or Round-Trip Time).

- BSSIDs (Basic Service Set Identifiers) (MAC (Medium Access Control) address of the air interface) of the WLAN access points observed and, optionally,

    - SSIDs (Service Set Identifiers);
    - signal strengths (RSSI (received signal strength index), physical Rx level in dBm ref 1 mW, etc.)
    - timing measurements (Round-trip Time).

This data gets uploaded to the server or server cloud, where generating of models of wireless communication nodes for positioning purposes based on the fingerprints received from the multitude of the users takes place. Such models may be coverage areas, node positions, radio propagation models, Rx fields, etc. In the end, these models are transferred back to the user terminals for use in position determination.

Note that although the end user terminal has GNSS-capability, the end user can still benefit from using cellular/non-cellular positioning technologies in terms of time-to-first-fix and power consumption. Also, not all applications require highly accurate GNSS-based position (e.g. for local weather application it suffices to use cell-based location estimate). Also, cellular/non-cellular positioning technologies work indoors and in urban canyons, which are generally challenging environments for GNSS-based technologies.

The positioning can function in two modes. The first mode is the terminal-assisted mode, in which the terminal performs the measurements of the cellular and/or non-cellular air interface, provides the measurements to the remote server, which in turn provides the position estimate back to the device.

The second mode is the terminal-based mode, in which the device has a local copy of the radio map (or most likely, a subset of the global radio map). Such a subset can be downloaded by the device from a remote server for the (geographic) area of interest (e.g. a small area around the current location, or for a whole country, to name but a few non-limiting examples) out of a global radio map comprised a plurality of such subsets. Such a subset can further be pre-installed to the device in the factory, but even in that case the data needs to be refreshed at some point.

US 2016/021494 A1 is directed towards systems, methods, and computer-readable media related to employing adaptive multi-feature semantic location sensing methods to estimate the semantic location of a mobile device. A set of wireless data scans associated with one or more access points at one or more locations may be received. One or more features of the one or more locations may be identified, based upon the set of wireless data scans wherein the features are associated with one or more location metrics. At least one of the one or more access points may be determined to be associated with a first location based upon, at least in part, the set of wireless data scans.

US 2017/272911 is directed towards a method of associating environmental context with wireless access points is disclosed. In some embodiments, a method on a user equipment may comprise determining at least one environmental context associated with a subset of one or more Access Points (APs) visible to the UE at an estimated location of the UE. The at least one environmental context associated with the subset may be determined based on one or more of wireless measurements by the UE, and/or sensor measurements by the UE. Further, at least one AP cluster may be determined by clustering the subset of the one or more APs visible to the UE based on the at least one environmental context and the estimated location.

## SUMMARY OF SOME EXEMPLARY EMBODIMENTS

In the positioning phase, it is difficult to identify buildings and/or street addresses, since most of the positioning based on GNSS does not work reliable in indoor scenarios. Since most of the radio nodes that are utilized by positioning based at least in part on aforementioned radio maps are deployed indoors (within the buildings), estimated radio node locations are biased towards the outdoor areas in general. This results in poor building and/or street address identifying, which are essentially needed e.g. in emergency call positioning in which a highly reliable dispatchable address is needed for emergency responders.

It is thus, inter alia, an object of the invention to achieve positioning enabling accurate identifying of buildings and/or street addresses.

According to a first exemplary aspect of the present invention, a method is disclosed, the method comprising:

- determining initial positioning information indicative of a locations of a plurality of radio nodes, wherein the initial positioning information is determined based at least partially on one or more fingerprint information comprising a plurality of-radio nodes fingerprints;
- determining initial distances information indicative of at least one estimated distance between at least two locations of the plurality of radio nodes;
- determining updated positioning information indicative of updated respective locations of the one or more radio nodes, wherein the respective locations of the one or more radio nodes are updated based at least partially on the distances information that is determined based at least partially on the initial distances information, wherein the distances information is determined based on the updated respective locations of the one or more radio nodes;
- determining cluster information based on the at least one estimated distance, wherein at least two of the radio nodes being located in vicinity to each other are determined to be comprised by a respective cluster, wherein a plurality of clusters are determined in case more than one estimated distance is comprised or represented by the initial distances information; and
- determining cluster location information indicative of a respective cluster location of one or more clusters, wherein a respective cluster is associated with one single area of interest, and wherein the cluster location information is to be output for usage in a positioning service.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a mobile terminal. In case this method is performed and/or controlled by a server of a positioning support system, e.g. comprising an electronic device and the server, the positioning is performed and/or controlled in a so-called terminal-assisted mode. In case this method may for instance be performed and/or controlled by the electronic device whose position is to be determined, then the positioning may for instance be performed and/or controlled in a so-called terminal-based mode. For instance, the method may be performed and/or controlled by using at least one processor of the electronic device, or the server, or the server cloud.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

In the following, exemplary features and exemplary embodiments of all aspects of the present invention will be described in further detail.

The method of the first exemplary aspect may for instance be performed and/or controlled by a server, e.g. a positioning server. Such a positioning server may for instance provide the positioning service. Such a positioning server may for instance be or be a part of a radio positioning support system, e.g. for a predetermined environment (e.g. a site, a building, a complex of buildings like a shopping center, a parking garage, an airport, a company site, a public building, to name but a few non-limiting examples). For example, such a positioning service may for instance be an indoor positioning system, or a self-contained positioning system, or a combination thereof.

The one or more radio nodes may for instance be comprised by or be a part of the radio positioning support system. One or more (e.g. all) radio nodes may for instance transmit (e.g. broadcast) or trigger to transmit or may be configured to transmit or to trigger to transmit (a) respective signal(s), e.g. automatically and/or repeatedly (e.g. on a periodic basis). Such signal(s) may for instance comprise or contain information enabling receivers (e.g. at least one electronic device located within a coverage area of the one or more radio nodes) to gather (e.g. receive and/or measure) the signal(s). The signal(s) may for instance enable the at least one electronic device to determine (e.g. estimate) its position at least partially based on the signal(s). An example of information comprised or contained by such (a) signal(s) is at least one identifier of the one or more radio nodes enabling the at least one electronic device (as the receiver) to obtain the respective location of the one or more radio nodes at least partially based on the signal(s).

An example of an identifier of a respective radio node of the one or more radio nodes may for instance be a name of the respective radio node, an address of the respective radio node (e.g. a MAC address or an IP address), an universally unique identifier (UUID), a SSID, a BSSID, or a combination thereof. Such an identifier of the respective radio node may for instance be unique for the respective radio node of the one or more radio node, thus allowing the respective radio node to be identified.

A respective radio node of the one or more radio nodes may for instance comprise a radio interface, e.g. a Bluetooth and/or BLE and/or WLAN radio interface, which includes at least a Bluetooth and/or BLE and/or WLAN transmitter. Such a transmitter may for instance also be a part of a corresponding transceiver. The radio interface may for instance be configured to transmit (radio) signal(s). An example of a respective radio node is a WLAN access point, and/or Bluetooth beacon and/or BLE beacon.

The at least one electronic device may for instance be a mobile device, e.g. a smartphone, tablet, wearable, or IoT (Internet-of-Things)-device, to name but a few non-limiting examples. The electronic device may for instance be portable (e.g. weigh less than 5, 4, 3, 2, or 1 kg). The electronic device may for instance comprise or be connectable to a display, e.g. for displaying information, e.g. a map or navigation information such as a route that is guide respectively navigated to a user. The electronic device may for instance comprise or be connectable to means for outputting sound, e.g. in form of spoken commands or information. The electronic device may for instance comprise or be connectable to one or more sensors for determining the devices position, such as for instance a GNSS receiver, e.g. in the form of a GPS receiver. The mobile device may for instance comprise or be connectable to a receiver and/or transmitter (e.g. a transceiver) for receiving and/or sending information, e.g. signal(s) of one or more radio nodes. The electronic device may for instance be suitable for outdoor and/or indoor navigation respectively positioning.

The initial positioning information indicative of a respective location of one or more radio nodes may for instance be determined based at least partially on such one or more pieces of fingerprint information. Thus, the respective fingerprint information may for instance be at least one piece of fingerprint information obtained (e.g. received) from an electronic device. Alternatively or additionally, a plurality of pieces of fingerprint information may for instance be obtained, e.g. from one electronic device, or from a plurality of electronic devices.

The determined initial positioning information may for instance be a single piece of initial positioning information, and may for instance comprise a plurality of respective locations of one or more radio nodes. Alternatively, a plurality of pieces of initial positioning information may for instance be determined, wherein each of that plurality of pieces of initial positioning information comprises or represents a single location of one respective radio node of the one or more radio nodes. The same may for instance apply to the distances information, cluster information, and/or the cluster location information.

A respective fingerprint information comprises or contains one or more radio nodes within the meaning of the present invention, e.g. by at least one identifier of a respective radio node of the one or more radio nodes, being comprised by or being a part of the respective fingerprint information. For instance, in case the initial positioning information is determined based at least partially on a plurality of pieces of fingerprint information, each of the plurality of pieces of fingerprint information may for instance be respectively gathered (e.g. measured and/or determined), e.g. by at least one electronic device, or a plurality of electronic devices.

It will be understood that within the meaning of the present invention the formulation of more than one estimated distances are comprised or represented by the distances information refers to at least three radio nodes respectively their locations that are utilized to determine the distances information, where three radio nodes respectively their locations are needed for determining at least two distances between them.

Optionally, the cluster location information may for instance be stored, e.g. for outputting the respective cluster location information, e.g. based on a received positioning request.

Additionally, the at least one electronic device may for instance gather (e.g. measure) the power of (a) received signal(s) with which the signal(s) are transmitted by the one or more radio nodes. Such a gathered power of the signal(s) is referred to as signal strength information within the meaning of the present invention. An example of a received signal strength value that may for instance be comprised by or represented by a signal strength information is a RSSI or a representation of a physical receiving power level value (e.g. a Rx power level value), e.g. in dBm.

According to an exemplary embodiment of all aspects of the present invention, the cluster location information is a part of or being comprised by a radio map.

The radio map may for instance be a partial radio map or a global radio map that can be provided e.g. to an electronic device requesting positioning services, e.g. by a corresponding positioning request. A partial radio map may for instance comprise only a part of an area that is comprised by the global radio map.

The radio map may for instance be a coverage area model of the radio positioning support system that may be provided, e.g. to at least one electronic device that requests its location to be determined. The radio map may for instance represent (e.g. fixed) installation positions of (the) one or more radio nodes and further (e.g. expected) coverage areas associated with the respective radio node of the one or more radio nodes. The radio map may for instance represent a radio coverage model of the expected radio coverage associated with the respective radio node of the one or more radio nodes. An electronic device whose location is to be determined gathers at least one fingerprint information. Based at least in part on this fingerprint information, the electronic device may for instance determine (e.g. estimate) its (e.g. current) location by comparing the fingerprint information respectively one or more identifiers of radio nodes and corresponding RSSI observable with those comprised by or contained in or represented by the radio map.

According to an exemplary embodiment of the first exemplary aspect of the present invention, the distances information is determined based on a signal strength information of a respective radio node of the one or more radio nodes, wherein the signal strength information is selected to be the one with the highest received signal strength value, wherein a respective distance between this respective radio node and another radio node of the one or more radio nodes is determined based on a path loss formula and the respective signal strength information of the other radio node.

This may for instance be performed for a plurality of radio nodes so that every distance between the radio node with the highest signal strength of a respective fingerprint information to the other radio nodes of the fingerprint information is determined. It will be understood that in case a plurality of pieces of fingerprint information are received, the distance(s) of a respective radio node with the highest signal strength value according to the respective signal strength information comprised by a respective fingerprint information can be determined to other one or more radio nodes comprised by this respective fingerprint information.

For instance, distance from radio node A to other radio nodes can be estimated using the fingerprint information in which the radio node A has (very) strong signal (e.g. represented by a corresponding RSSI). A strong signal from the radio node indicates that fingerprint information has been obtained (e.g. gathered and/or measured) in the immediate vicinity (proximity) of the radio node, at present radio node A.

Further, the same fingerprint information may additionally comprise or contain signal strength information (e.g. RSSI measurements) for the other radio nodes of the one or more radio nodes too, which can be used to estimate distances between the radio node with the highest signal strength (e.g. the highest RSSI represented or comprised by the fingerprint information) and these other radio nodes. Distance estimate may for instance be determined (e.g. computed) based on the path loss exponent, $d^* = 10\,(Tx-Rx)/10n$, where Tx and n are default values for transmission power and path loss exponent, $d^*$ is the distance between transmitter and receiver, and Rx is the measured received signal strengths (e.g. RSSI). If there are several received signal strength measurements (e.g. RSSI) for a corresponding pair of radio nodes, then distance between them may for instance be determined as an average of the distances obtained for each of the received signal strength measurements (e.g. RSSI). Estimated distances between different radio nodes may be summarized in a distance matrix.

According to an exemplary embodiment of the first exemplary aspect of the present invention, the method further comprises:

- determining updated positioning information indicative of updated respective locations of the one or more radio nodes, wherein the respective locations of the one or more radio nodes are updated based at least partially on the distances information that is determined based at least partially on the initial distances information, wherein the distances information is determined based on the updated respective locations of the one or more radio nodes.

The distances information may for instance be determined based on the updated respective locations of the one or more radio nodes instead of the respective locations of one or more radio nodes of the initial positioning information. Alternatively, the distances information may for instance be determined based on the updated respective locations of the one or more radio nodes in addition to the respective locations of one or more radio nodes of the initial positioning information

The determining of the updated positioning information may for instance be performed and/or controlled prior to the step of determining distances information. Alternatively, the determining of the updated positioning information may for instance be performed and/or controlled subsequent to the step of determining distances information. In each case of the aforementioned ones, after the determining of the updated positioning information, the respective location(s) of the one or more radio nodes of the initial positioning information are refined by the determining of the updated positioning information.

The updated positioning information may for instance comprise a plurality of respective locations of one or more radio nodes. Alternatively, a plurality of pieces of updated positioning information may for instance be determined, wherein each of that plurality of pieces of updated positioning information comprises or represents a single location of one respective radio node of the one or more radio nodes.

Thus, the updated positioning information indicative of updated respective locations of the one or more radio nodes may for instance be determined based at least partially on the initial distances information, wherein the respective location(s) of the one or more radio nodes of the initial positioning information may for instance be used as a basis. Then, the distances information may for instance be determined (e.g. again) based on the updated respective locations of the one or more radio nodes of the updated positioning information.

According to an exemplary embodiment of the first exemplary aspect of the present invention, the updated positioning information is determined based at least partially on a Gauss-Newton iteration.

The Gauss-Newton iteration may for instance be performed a plurality of times, e.g. at least twice. The Gauss-Newton iteration may for instance be defined as a vector function $\begin{bmatrix} X \\ D \end{bmatrix} = g(X)$, where X is a vector of concatenated radio node locations of the one or more radio nodes corresponding to the initial positioning information, and D is vector of distances between radio nodes corresponding to the distances information. Elements of this vector function corresponding to X are $g_i = x_i$, elements corresponding to D are of the form $g_{i,j} = \|x_i - x_j\|$, where $i,j \in \{1, N\}$ and $x_i, x_j$ are locations of i-th and j-th radio nodes, and N is the number of radio nodes. Rows of corresponding Jacobian matrix are then of the

$$J_i = \left[ \underbrace{0 \ldots 0}_{2(i-1)}, 1, 1, \underbrace{0 \ldots 0}_{2(N-i)} \right] \text{ for } X\text{-part, and } J_{i,j} = \left[ \underbrace{0 \ldots 0}_{2(i-1)}, \frac{(x_i - x_j)^T}{\|x_i - x_j\|}, \underbrace{0 \ldots 0}_{2(j-i-1)}, - \frac{(x_i - x_j)^T}{\|x_i - x_j\|}, \underbrace{0 \ldots 0}_{2(N-j)} \right] \text{ for a } D\text{-}$$

part. The Gauss-Newton iteration may then for instance be performed by a cost function to be minimized as follows:

$\min\limits_{X} ([D^* \, X_0^*]^T - g(X))$, where $D^*$ is a vector of estimated distances corresponding to the distances information and $X_0^*$ is the prior radio node locations estimated according to the initial positioning information. For determining the updated positioning information based at least partially on the Gauss-Newton iteration, the Gauss-Newton iteration refines the solution iteratively starting from initial guess $X_0^*$: $X_i^* = X_{i-1}^* + \alpha \left( J_{X_{i-1}^*}^T \cdot J_{X_{i-1}^*} \right)^{-1} \cdot J_{X_{i-1}^*}^T \cdot (D^* - g(X_{i-1}^*))$.

According to an exemplary embodiment of the first exemplary aspect of the present invention, the cluster information is determined based at least in part on a hierarchical clustering, wherein a pre-defined or defined according to pre-defined rules threshold value is set to represent the minimum distance between two clusters.

Iterations of the Gauss-Newton iteration may thus continue either e.g. until a maximum number of iterations is performed, wherein this maximum number of iterations may for instance be represented by the threshold value and/or until a difference between $X_i^*$ and $X_{i-1}^*$ is smaller than the pre-defined or defined according to pre-defined rules threshold value. This difference may for instance also (additionally or alternatively to the maximum number of iterations) be represented by the threshold value. The threshold value may for instance be an integer, binary and/or hexadecimal value. The threshold value may for instance represent a distance in a distance unit (e.g. meters or yards, to name but a few non-limiting examples).

According to an exemplary embodiment of the first exemplary aspect of the present invention, the cluster information is determined in an iterative fashion.

The cluster information may for instance be determined based at least partially on a hierarchical clustering. Such a hierarchical clustering may for instance be performed and/or controlled in an iterative fashion, e.g. iteratively determining the cluster information. For instance, distances of the distances information between radio nodes, e.g. as a (distance) matrix of (a) respective distance measure(s), and a reasonable pre-defined threshold distance may for instance be utilized during the hierarchical clustering. The determining of the cluster information based at least partially on the hierarchical clustering may for instance start with each radio node of the one or more radio node representing one (single) cluster. At each subsequent (iterative) step of the hierarchical clustering, two of those clusters having minimal distance between each other may for instance be combined. The distance between the clusters may for instance be determined (e.g. computed) as the minimal distance between the radio nodes from different clusters. The iterative hierarchical clustering may for instance be performed and/or controlled until there are no clusters which are closer than the pre-defined threshold distance.

According to an exemplary embodiment of the first exemplary aspect of the present invention, a respective location of a respective cluster of the one or more clusters is set to be an average of the respective location of the one or more radio nodes comprised by or being a part of the respective cluster.

The respective location of a respective cluster may for instance be defined as an average of respective locations of radio nodes of a cluster (e.g. comprised by or associated with or belonging to the respective cluster corresponding to the cluster information).

According to an exemplary embodiment of the first exemplary aspect of the present invention, the method further comprises:

- mapping the respective location of a respective cluster of the one or more clusters of the cluster location information to a venue information indicative of an identifier of a respective venue located at the respective location of the respective cluster.

The mapping may for instance be performed and/or controlled by associating the respective location of a respective cluster of the one or more clusters of the cluster location information with a venue represented by the venue information. For instance, the cluster location information and the venue information may for instance be stored in a memory, e.g. a database that is comprised by or connectable to the first apparatus performing and/or controlling the method of the first exemplary aspect of the present invention. Then, the mapping may for instance be performed and/or controlled by generating a link or an association between a respective cluster of the cluster location information to respectively with an identifier of the venue of the venue information. Such a link or association may for instance be stored in the memory as well, or additionally or alternatively be comprised by or be a part of the cluster location information.

For instance, cluster(s) may for instance further be mapped to corresponding street addresses, e.g. using geocoding APIs (Application Programming Interfaces). In such a way each cluster, and therefore, the radio nodes of the cluster as well, may for instance be associated with a specific (building) address represented by a respective venue information comprising or representing a respective identifier of the venue.

## BRIEF DESCRIPTION OF THE DRAWINGS

In the figures show:

Fig. 1    a schematic block diagram of a system according to the third exemplary aspect of the present invention;

Fig. 2    a flowchart showing an example embodiment of a first method according to the first exemplary aspect of the present invention, for instance performed by a server 110 of Fig. 1;

Fig. 3    a flowchart showing an example embodiment of a first method according to the first exemplary aspect of the present invention, for instance performed by an electronic device 130 of Fig. 1;

Fig. 4    a schematic block diagram of a first apparatus configured to perform the first method according to the first exemplary aspect of the present invention;

Fig. 5    a schematic block diagram of a second apparatus configured to perform the second method according to the second exemplary aspect of the present invention;

Fig. 6    an example scenario of a positioning service performed within the vicinity of a building; and

Fig. 7    a further example scenario of a positioning service performed within the vicinity of two buildings.

## DETAILED DESCRIPTION OF SOME EXEMPLARY EMBODIMENTS

The following description serves to deepen the understanding of the present invention and shall be understood to complement and be read together with the description as provided in the above summary section of this specification.

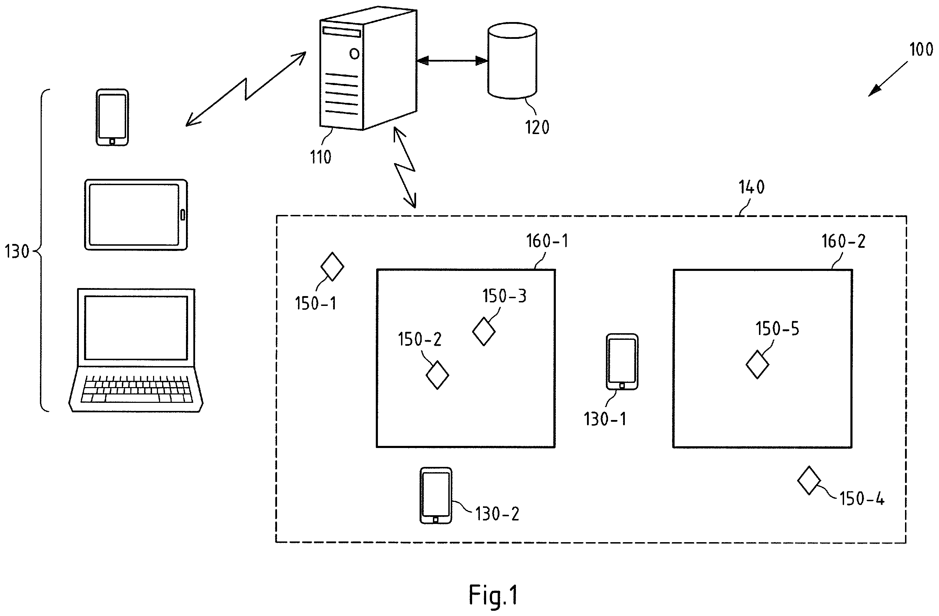

Fig. 1 is a schematic high-level block diagram of a system 100 according to an exemplary aspect of the present invention. Such a system 100 may for instance represent a positioning support system as used by one or more exemplary embodiment according to all exemplary aspects of the present invention. System 100 comprises a server 110, an optional database 120, one or more electronic devices 130 (three different realizations are shown, e.g. a smartphone, a tablet, and a laptop), further electronic devices 130-1 and 130-2 are located within the vicinity of buildings 160-1 and 160-2. Further, system 100 comprises in area 140 of interest radio nodes 150.

Server 110 may alternatively be embodied as a server cloud (e.g. a plurality of servers connected, e.g. via the Internet (not shown in Fig. 1) and providing services (e.g. positioning services) at least partially jointly). Server 110 may for instance be configured to provide radio maps, e.g. to electronic devices 130 so that according to a so-called terminal-based mode the electronic devices 130 are enabled to determine (e.g. estimate) their locations, e.g. within the area 140.

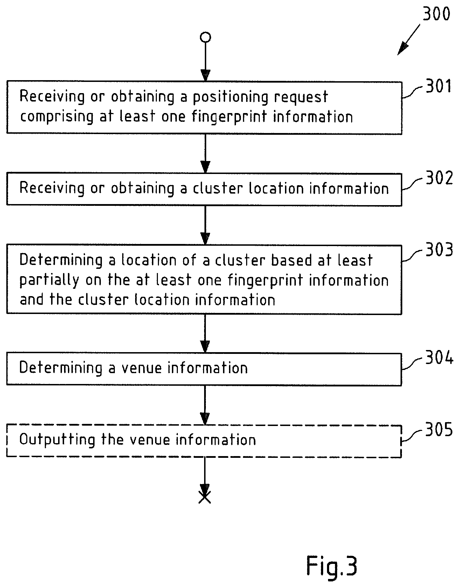

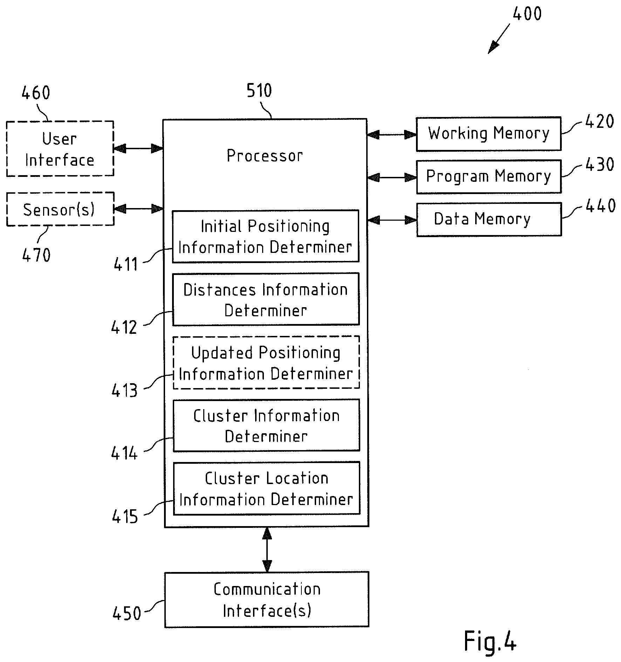

Database 120 is optional. Database 120 may for instance be comprised by or connectable to server 110. Database 120 may for instance comprise a memory, e.g. for storing one or more pieces of information (e.g. with respect to Fig. 3 and Fig. 4 specific examples of storable information are described).

Radio nodes 150-1 to 150-5 are deployed throughout area 140. Radio nodes 150-2 and 150-3 are deployed inside of building 160-1. Radio node 150-5 is deployed inside of building 160-2. Radio nodes 150-1 and 150-4 are deployed outside of buildings 160-1 and 160-2 within area 140.

The method according to all aspects of the present invention may for instance comprise a learning phase and a positioning phase.

Example embodiments enable system 100 to perform and/or control a learning phase of the system 100, performed and/or controlled in particular by server 110 and/or at least one of the radio nodes 150, comprising:

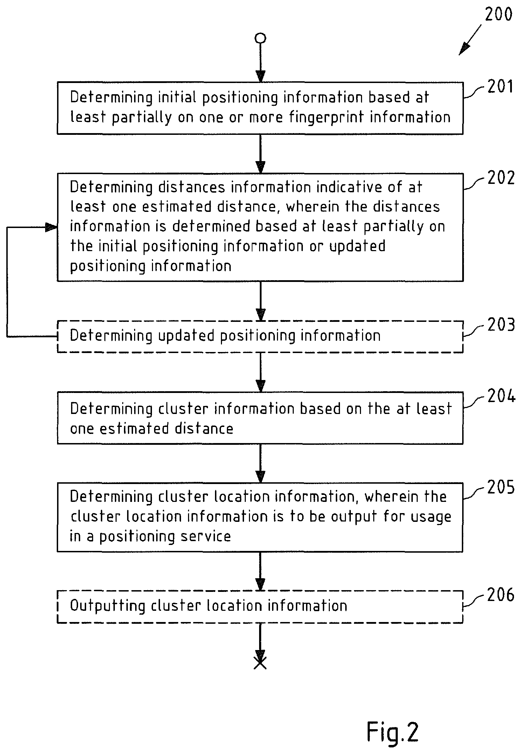

- obtain initial estimates (initial positioning information) of the radio node locations based on the GNSS-referenced fingerprints (see step 201 of Fig. 2);
- estimate distances between radio nodes (distances information) (see step 202 of Fig. 2);
- update initial radio node location estimates (updated positioning information) using additional information about distances between radio nodes (see optional step 203 of Fig. 2);
- cluster radio nodes (cluster information) based on the distance matrix (see step 204 of Fig. 2);
- estimate cluster locations (cluster location information) and map them to buildings (see step 205 of Fig. 2); and
- optionally: use cluster to building mapping (and vice versa) to determine in which building the device to be positioned is located.

Cluster information determined during such an exemplary learning phase can be further used to determine a specific building represented by a venue information enabling identifying the building in which an electronic device is located.

Example embodiments enable system 100 to perform and/or control a positioning phase of the system 100, performed and/or controlled in particular by at least one of the electronic devices 130, comprising:

- determine cluster (determine cluster of a location) which contains most of the radio nodes detected by the device is identified (see step 303 of Fig. 3); and
- determine building corresponding to the cluster identified during the preceding step of determining cluster that is the most probable building in which the electronic device is located (see step 304 of Fig. 3).

The method according to all aspects of the present invention enables to use information about distances between radio nodes to improve estimates of radio node locations obtained based on GNSS referenced samples, as well as clustering radio nodes according to building-wise clusters where they are located.

Having an understanding about the building in which each access point respectively radio node resides, e.g. in positioning phase it may not be necessary to estimate e.g. latitude respectively longitude coordinates at all. Instead, it may for instance suffice to access the radio node building information (respectively venue information) and use e.g. majority voting to decide, which is the most probable building in which the electronic device resides.

Initial estimate of the radio node location (initial positioning information) may for instance be determined (e.g. computed) as weighted average of the corresponding radio sample locations, wherein each radio sample has a GNSS-based location estimate and sample weight is an increasing function of the associated signal strength.

Initial radio node locations (of the step of determining initial positioning information, e.g. initial estimate) may be refined based on the information on distances between radio nodes (of the step of determining distances information, e.g. distances between radio nodes) using Gauss-Newton iteration. Gauss-Newton iteration iteratively updates locations of the radio nodes to minimize the difference between distances determined (e.g. computed) according to estimated radio node locations (of the step of determining initial positioning information, e.g. initial estimate), and distance estimated based on the measured radio signals of the step of determining distances information (e.g. estimating distances between radio nodes).

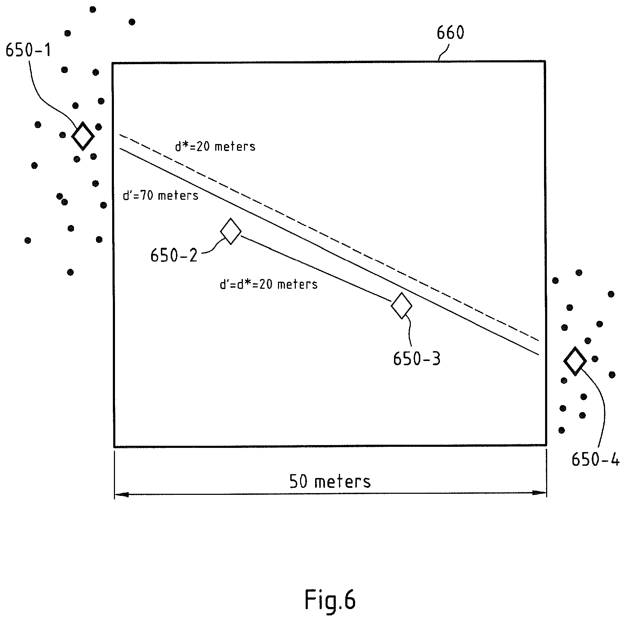

Fig. 6 illustrates a typical situation: the rectangle represents the boundaries of the building 660, the plurality of dots represent GPS locations of the received signals from the radio nodes 650-1 to 660-4, depicted by the diamond shaped symbols, wherein the radio nodes 650-2 and 650-3 are illustrated with thin lines, and the radio nodes 650-1 and 650-4 are illustrated with bold lines indicating that the radio nodes 650-1 and 650-4 are located outside of the boundaries of the building 660. Dashed and solid lines between the radio nodes 650-1 and 650-4 indicate, respectively, the distance according to initial locations of the radio nodes: at hand d' equals 70 meters, and distance estimated based on measured signal strength: at hand d* equals 20 meters. As seen, those distances do not match. This is because GPS references are outdoors in general, and hence initial locations of the radio nodes are also estimated outdoors, however, in fact radio nodes are most probably indoors, and are close to each other according to the distance estimations done at the step of estimating distances between radio nodes. The proposed Gauss-Newton iteration updates radio node locations in such a way that distances between radio nodes as well as distances from the initial radio node locations are optimized, resulting in more accurate location estimates, represented by radio nodes 650-2 and 650-3.

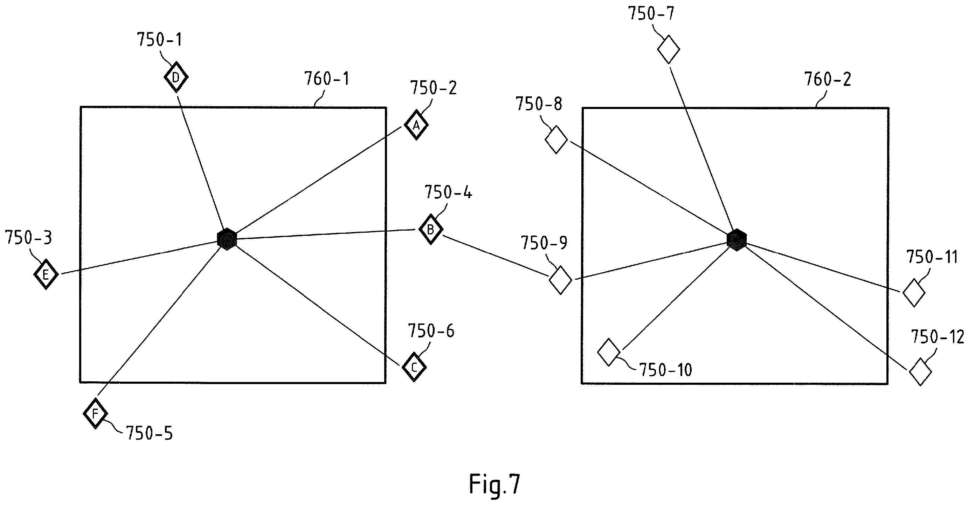

Such estimation is more reliable than estimate based on a single scan since it implicitly uses information about more radio nodes than a single fingerprint can contain. In Fig. 7, two buildings 760-1 and 760-2 with two sets of radio nodes 750-1 to 750-12 belonging to different clusters (cluster of building 760-1: radio nodes 750-1 to 750-6 illustrated by the diamond shaped symbols with bold lines and with the letters A to F illustrated within the symbols; cluster of building 760-2: radio nodes 750-7 to 750-12 illustrated by the diamond shaped symbols with thin lines) are illustrated. Note: here locations of radio nodes were not estimated by Gauss-Newton iteration, but they still can be clustered by using only distances estimated at the step of estimating distances between radio nodes (determining initial positioning information, see step 201 of Fig. 2) e.g. in the learning phase, e.g. as described above. As an example, if it is assumed that there are no clusters and the estimation is based on locations of the radio nodes 750-2 and 750-4, the final location estimate will be outside of the buildings, and it will be impossible to say in which building device/user (illustrated by the filled black hexagon in building 760-1) is. However, if it is known that radio nodes 750-2 and 750-4 belong to the same cluster located in the first building 760-1, it can quite reliably be determined that device/user is located inside of the first building 760-1.

The proposed solution improves accuracy of radio node location estimation as well as it improves the address and building identification performed and/or controlled by a user device.

Additionally, radio node locations (original estimates or estimates refined with Gauss-Newton) can be used to determine (e.g. compute) geocode (street address) of each radio node. This information can be further used in clustering by assigning geocode for each cluster already during clustering process, and prohibiting combination of clusters with different geocodes. Geocode of a cluster can be determined as most frequent geocode of the radio nodes of the cluster, represented by at least one venue information.

Additional information about distances between different radio nodes may for instance be utilized. The range of utilizable data is extended, since also non-GNSS referenced data contain such distance information. This improves radio node location estimation accuracy, and as a result, localization performance. Noise of such positioning systems due to estimation of distances between radio nodes may for instance be alleviated by having large amount of data that averages error out.

Fig. 2 is a flowchart 200 showing an example embodiment of a method according to the first exemplary aspect of the present invention. This flowchart 200 may for instance be performed by server 110, or radio node 150 of Fig. 1.

In a first step 201, initial positioning information indicative of a respective location of one or more radio nodes is/are determined, wherein the initial positioning information is/are determined based at least partially on one or more fingerprint information comprising one or more radio nodes (e.g. radio nodes 150 of Fig. 1). Step 201 may for instance be performed and/or controlled by server 110 and/or radio node 150 of Fig. 1 based on at least one fingerprint information gathered by at least one of the electronic devices 130 of Fig. 1.

In a second step 202, distances information indicative of at least one estimated distance between at least two locations of the radio nodes is/are determined. Distances information is/are determined in case the initial positioning information comprises or represents at least two respective locations of the radio nodes. Step 202 may for instance be performed and/or controlled by server 110 and/or radio node 150 of Fig. 1, subsequent to step 201 in that initial positioning information is/are determined.

In an optional third step 203, updated positioning information indicative of updated respective locations of the one or more radio nodes is/are determined, wherein the respective locations of the one or more radio nodes are updated based at least partially on the distances information that is/are determined based at least partially on the initial distances information. Step 203 may for instance be performed and/or controlled by server 110 and/or radio node 150 of Fig. 1.

In a fourth step 204, cluster information based on the at least one estimated distance is/are determined, wherein at least two of the radio nodes being located in vicinity to each other are determined to be comprised by a respective cluster, wherein a plurality of such clusters are determined in case more than one estimated distance is comprised or represented by the distances information. Step 204 may for instance be performed and/or controlled by server 110 and/or radio node 150 of Fig. 1.

In a fifth step 205, determining cluster location information indicative of a respective location of one or more clusters is/are determined, wherein a respective cluster is associated with one single venue, and wherein the cluster location information is/are to be output for usage in a positioning service. Step 205 may for instance be performed and/or controlled by server 110 and/or radio node 150 of Fig. 1.

In an optional sixth step 206, cluster location information is/are output, e.g. to an electronic device, e.g. that requested its position to be determined. In case flowchart 200 is performed and/or controlled by server 110 of Fig. 1, cluster location information may for instance be stored in database 120 of Fig. 1 in step 205. Then, the stored cluster location information may for instance be output to electronic device 130 of Fig. 1 by server 110 of Fig. 1.

In case optional step 203 is performed and/or controlled, distances information may for instance be determined (another time respectively again) in step 202. This is illustrated in flowchart 200 by the arrow pointing back from step 203 to

EP 3 818 756 B1

step 202. Alternatively, in case step 203 is performed and/or controlled, step 203 may for instance be performed prior to step 202 and subsequent to step 201. In the latter case, step 202 of determining distances information may for instance be performed (e.g. only once) but instead of determining distances information at least partially on initial positioning information of step 201, the determining of distances information may for instance be performed and/or controlled based at least partially on updated positioning information of step 203.

Fig. 3 is a flowchart 300 showing an example embodiment of a method according to the second exemplary aspect of the present invention. This flowchart 300 may for instance be performed by electronic device 130 of Fig. 1.

In particular, flowchart 200 may for instance be performed by server 110 of Fig. 1 in conjunction with flowchart 300 that may for instance be performed by electronic device 130 of Fig. 1. Together, flowchart 200 of Fig. 2 and flowchart 300 of Fig. 3 may for instance enable a positioning support system (e.g. system 100 of Fig. 1) that enables a venue (e.g. building 150-1 and/or 150-2 of Fig. 1) to be identified in that electronic device 130 is located and that requests its position to be determined. Based on receiving such a request, server 110 performing and/or controlling flowchart 200 of Fig. 2 may for instance provide cluster location information to the electronic device 130 performing and/or controlling flowchart 300 of Fig. 3, so that electronic device 130 is enabled to identify e.g. a building in that electronic device 130 is located during performing its position to be determined.

In a first step 301, a positioning request comprising at least one fingerprint information is received or obtained. The positioning request may for instance stem from an electronic device (e.g. electronic device 130 of Fig. 1). In case flowchart 300 is performed and/or controlled by the electronic device, the positioning request may for instance be obtained (by electronic device), e.g. from an application executed by the electronic device (e.g. as a result of an input of a user of the electronic device). In case flowchart 300 is performed and/or controlled by server 110 and/or radio node 150 of Fig. 1, the positioning request may for instance be received by server 110 and/or radio node 150 of Fig. 1, e.g. received from an electronic device (e.g. electronic device 130-1 or 130-2 of Fig. 1) requesting its position to be determined (e.g. within area 140 of Fig. 1).

In a second step 302, a cluster location information indicative of a respective location of one or more clusters comprising one or more radio nodes is/are received or obtained. In case flowchart 300 is performed and/or controlled by the electronic device, the cluster location information may for instance be obtained, e.g. from an application executed by the electronic device (e.g. as a result of an input of a user of the electronic device since e.g. the cluster location information is already stored in a memory comprised by or connectable to the electronic device, and further accessible by the application). In case flowchart 300 is performed and/or controlled by server 110 and/or radio node 150 of Fig. 1, the cluster location information may for instance be received by server 110 and/or radio node 150 of Fig. 1, e.g. received from an electronic device (e.g. electronic device 130-1 or 130-2 of Fig. 1) in connection with e.g. a positioning request of such an electronic device.

In a third step 303, a location of a cluster based at least partially on the at least one fingerprint information and the cluster location information is determined, wherein a respective cluster of the one or more clusters of the cluster location information is identified in which a respective location of one or more radio nodes represented by the at least fingerprint information is located. Step 303 may for instance be performed and/or controlled by electronic device, in case flowchart 300 is performed and/or controlled by the electronic device (e.g. performing and/or controlling positioning services in a so-called terminal-based mode). Alternatively, step 303 may for instance be performed and/or controlled by server 110 and/or radio node 150 of Fig. 1, in case flowchart 300 is performed and/or controlled in connection with a positioning support system (e.g. system 100 of Fig. 1) in a so-called terminal-assisted mode.

In a forth step 304, a venue information indicative of an identifier of a venue based on the location of the cluster is/are determined, wherein the location of the venue corresponds to the respective location of the cluster. Step 304 may for instance be performed and/or controlled by electronic device in case step 301 to 303 have already been performed and/or controlled by electronic device. Step 304 may for instance be performed and/or controlled by server 110 and/or radio node 150 of Fig. 1, in case in step 301, the positioning request and in step 302, the cluster location information were received by the server 110 and/or the radio node 150 of Fig. 1.

In an optional fifth step 305, the venue information is/are output, e.g. from the electronic device 130 to server 110 and/or radio node 150 of Fig. 1. Alternatively, in case in step 304 the venue information was determined by server 110 and/or radio node 150 of Fig. 1, the venue information may for instance be output to electronic device (e.g. one of the electronic devices 130-1 and 130-2 of Fig. 1) from that the positioning request received in step 301 stems.

Fig. 4 is a schematic block diagram of an apparatus 400 according to an exemplary aspect of the present invention, which may for instance represent server 110 and/or radio node 150 of Fig. 1 (e.g. positioning is performed in a so-called terminal-assisted mode). Alternatively, apparatus 400 may for instance represent electronic device 130 of Fig. 1 (e.g. positioning is performed in a so-called terminal-based mode).

Apparatus 400 comprises a processor 410, working memory 420, program memory 430, data memory 440, communication interface(s) 450, an optional user interface 460 and optional sensor(s) 470. Apparatus 400 may for instance perform and/or control flowchart 200 of Fig. 2, and thus may for instance be enabled to perform and/or control the method of the first exemplary aspect of the present invention.

Apparatus 400 may for instance be configured to perform and/or control or comprise respective means (at least one of 410 to 470) for performing and/or controlling the method according to the first exemplary aspect of the present invention. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to the first exemplary aspect of the invention of the present invention.

Processor 410 may for instance comprise an initial positioning information determiner 411 as a functional and/or structural unit. Initial position information determiner 411 may for instance be configured to determine an initial position information (see step 201 of Fig. 2).

Processor 410 may for instance comprise a distances information determiner 412 as a functional and/or structural unit. Distances information determiner 412 may for instance be configured to determine an initial positioning information (see step 202 of Fig. 2).

Processor 410 may for instance comprise an optional updated positioning information determiner 413 as a functional and/or structural unit. Updated positioning determiner information 413 may for instance be configured to determine an updated positioning information (see optional step 203 of Fig. 2).

Processor 410 may for instance comprise a cluster information determiner 414 as a functional and/or structural unit. Cluster information determiner 414 may for instance be configured to determine a cluster information (see optional step 204 of Fig. 2).

Processor 410 may for instance comprise a cluster location information determiner 415 as a functional and/or structural unit. Cluster location information determiner 415 may for instance be configured to determine a cluster information (see optional step 205 of Fig. 2).

Processor 410 may for instance further control the memories 420 to 440, the communication interface(s) 450, the optional user interface 460 and the optional sensor(s) 470.

Processor 410 may for instance execute computer program code stored in program memory 430, which may for instance represent a computer readable storage medium comprising program code that, when executed by processor 410, causes the processor 410 to perform the method according to the first exemplary aspect of the present invention.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of fingerprint information, one or more pieces of initial positioning information, one or more pieces of distances information, one or more pieces of updated positioning information, one or more pieces of cluster information, one or more pieces of cluster location information, to name but a few non-limiting examples.

Communication interface(s) 450 enable apparatus 400 to communicate with other entities, e.g. with electronic device 130 of Fig. 1 in case apparatus 400 represents server 110 or radio node 130 of Fig. 1. The communication interface(s) 450 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 400 to communicate with other entities, (see entities of Fig. 1, in particular communication is enabled between entities that are illustrated with a double arrow pointing at each other in Fig. 1).

User interface 460 is optional and may comprise a display for displaying information to a user and/or an input device (e.g. a keyboard, keypad, touchpad, mouse, etc.) for receiving information from a user.

Sensor(s) 470 are optional and may for instance comprise a GPS-Sensor, accelerometer, and/or barometric sensor, to name but a few non-limiting examples.

Some or all of the components of the apparatus 400 may for instance be connected via a bus. Some or all of the components of the apparatus 400 may for instance be combined into one or more modules.

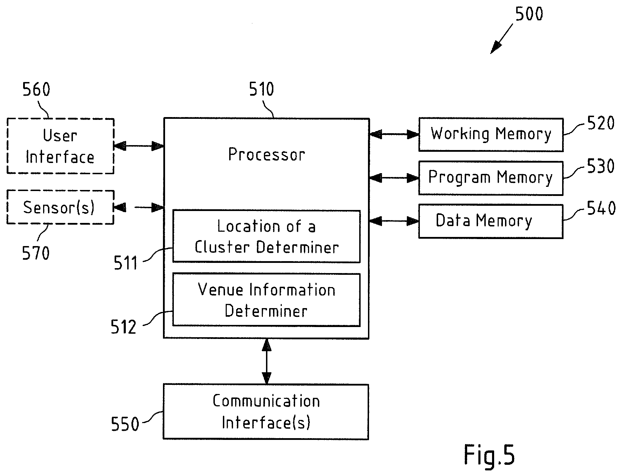

Fig. 5 is a schematic block diagram of an apparatus 500 according to an exemplary aspect of the present invention, which may for instance represent one of the electronic device 130 of Fig. 1 (e.g. performing positioning in a terminal-based mode). Alternatively, the schematic block diagram of the apparatus 500 according to an exemplary aspect of the present invention may for instance represent server 110 or radio node 150 of Fig. 1 (e.g. positioning in a terminal-assisted mode). Apparatus 500 may for instance perform and/or control flowchart 300 of Fig. 3, and thus may for instance be enabled to perform and/or control the method of the second exemplary aspect of the present invention.

Apparatus 500 comprises a processor 510, working memory 520, program memory 530, data memory 540, communication interface(s) 550, an optional user interface 560 and optional sensor(s) 570.

Apparatus 500 may for instance be configured to perform and/or control or comprise respective means (at least one of 510 to 570) for performing and/or controlling the method according to the second exemplary aspect of the present invention. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the second exemplary aspect of the invention of the present invention.

Processor 510 may for instance comprise location of a cluster determiner 511 as a functional and/or structural unit. Location of a cluster determiner 511 may for instance be configured to determine a location of a cluster (see step 303 of Fig. 3).

Processor 510 may for instance comprise venue information determiner 512 as a functional and/or structural unit. Venue information determiner 512 may for instance be configured to determine a venue information (see step 304 of Fig. 3).

Processor 510 may for instance further control the memories 520 to 540, the communication interface(s) 550, the optional user interface 560 and the optional sensor(s) 570.

Processor 510 may for instance execute computer program code stored in program memory 530, which may for instance represent a computer readable storage medium comprising program code that, when executed by processor 510, causes the processor 510 to perform the method according to the second exemplary aspect of the present invention.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more pieces of cluster location information, (partial and/or global) radio map data, and/or one or more pieces of venue information, to name but a few non-limiting examples.

Communication interface(s) 550 enable apparatus 500 to communicate with other entities, e.g. with server 110 of Fig. 1 in case apparatus 500 represents electronic device 130 of Fig. 1, to name but one non-limiting example. The communication interface(s) 550 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 500 to communicate with other entities (see entities of Fig. 1, in particular communication is enabled between entities that are illustrated with a double arrow pointing at each other in Fig. 1).

User interface 560 is optional and may comprise a display for displaying information to a user and/or an input device (e.g. a keyboard, keypad, touchpad, mouse, etc.) for receiving information from a user.

Sensor(s) 570 are optional and may for instance comprise a GPS-sensor, accelerometer, barometric sensor, to name but a few non-limiting examples.

Some or all of the components of the apparatus 500 may for instance be connected via a bus. Some or all of the components of the apparatus 500 may for instance be combined into one or more modules.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

**Claims**

1. A first method, comprising:

   - determining (201) initial positioning information indicative of locations of a plurality of-radio nodes, wherein the initial positioning information is determined based at least partially on one or more fingerprint information comprising a plurality of radio node fingerprints;
   - determining (202) initial distances information indicative of at least one estimated distance between at least two locations of the plurality of radio nodes
   - determining (203) updated positioning information indicative of updated respective locations of the plurality of radio nodes, wherein the respective locations of the plurality of radio nodes are updated based at least partially on the distances information that is determined based at least partially on the initial distances information, wherein the distances information is determined based on the updated respective locations of the plurality of radio nodes;
   - determining (204) cluster information based on the at least one estimated distance, wherein at least two of the radio nodes being located in vicinity to each other are determined to be comprised by a respective cluster, wherein a plurality of clusters are determined in case more than one estimated distance is comprised or represented by the initial distances information; and
   - determining (205) cluster location information indicative of a respective cluster location of one or more clusters, wherein a respective cluster is associated with one single area of interest, and wherein the cluster location information is to be output for usage in a positioning service.

2. The first method according to claim 1, wherein the cluster location information is a part of or being comprised by a radio map.

3. The first method according to any of the preceding claims, wherein the initial distances information is determined based on a signal strength information of a respective radio node of the plurality of-radio nodes, wherein the signal strength information is selected to be the one with the highest received signal strength value, wherein a respective distance between this respective radio node and another radio node of the one or more radio nodes is determined based on a path loss formula and the respective signal strength information of the other radio node.

4. The first method according to claim-3, wherein the updated positioning information is determined based at least partially on a Gauss-Newton iteration.

5. The first method according to any of the preceding claims, wherein the cluster information is determined based at least in part on a hierarchical clustering, wherein a pre-defined or defined according to pre-defined rules threshold value is set to represent the minimum distance between two clusters, and wherein the cluster information is determined in an iterative fashion.

6. The first method according to any of the preceding claims, wherein a respective location of a respective cluster of the one or more clusters is set to be an average of the respective location of the plurality of-radio nodes comprised by or being a part of the respective cluster.

7. The first method according to any of the preceding claims, further comprising:

- mapping the respective location of a respective cluster of the one or more clusters of the cluster location information to a venue information indicative of an identifier of a respective venue located at the respective location of the respective cluster.

8. A first apparatus configured to perform and/or control or comprising respective means for performing and/or controlling the method of any of the claims 1 to 7.


**Patentansprüche**

1. Ein erstes Verfahren, umfassend:

- Bestimmen (201) von anfänglichen Positionierungsinformationen, die Standorte einer Mehrzahl von Funkknoten anzeigen, wobei die anfänglichen Positionierungsinformationen zumindest teilweise auf der Grundlage einer oder mehrerer Fingerabdruckinformationen bestimmt werden, die eine Mehrzahl von Funkknoten-Fingerabdrücken umfassen;
- Bestimmen (202) von anfänglichen Entfernungsinformationen, die mindestens eine geschätzte Entfernung zwischen mindestens zwei Standorten der Mehrzahl von Funkknoten angeben
- Bestimmen (203) aktualisierter Positionierungsinformationen, die aktualisierte jeweilige Standorte der Mehrzahl von Funkknoten anzeigen, wobei die jeweiligen Standorte der Mehrzahl von Funkknoten zumindest teilweise auf der Grundlage der Abstandsinformationen aktualisiert werden, die zumindest teilweise auf der Grundlage der anfänglichen Entfernungsinformationen bestimmt werden, wobei die Entfernungsinformationen auf der Grundlage der aktualisierten jeweiligen Standorte der Mehrzahl von Funkknoten bestimmt werden;
- Bestimmen (204) von Cluster-Informationen auf der Grundlage der mindestens einen geschätzten Entfernung, wobei mindestens zwei der Funkknoten, die sich in der Nähe zueinander befinden, als zu einem Cluster gehörend bestimmt werden, wobei eine Mehrzahl von Clustern für den Fall bestimmt wird, dass mehr als eine geschätzte Entfernung von den anfänglichen Entfernungsinformationen umfasst oder repräsentiert wird; und
- Bestimmen (205) von Cluster-Standortinformationen, die einen jeweiligen Cluster-Standort von einem oder mehreren Clustern anzeigen, wobei ein jeweiliges Cluster mit einem einzelnen Gebiet von Interesse assoziiert ist und wobei die Cluster-Standortinformationen zur Verwendung in einem Positionierungsdienst ausgegeben werden sollen.

2. Das erste Verfahren nach Anspruch 1, wobei die Cluster-Standortinformationen Teil einer Funkkarte sind oder von einer Funkkarte umfasst werden.

3. Das erste Verfahren nach einem der vorhergehenden Ansprüche, wobei die anfänglichen Entfernungsinformationen auf der Grundlage von einer Signalstärkeinformation eines jeweiligen Funkknotens der Mehrzahl von Funkknoten bestimmt werden, wobei die Signalstärkeinformation so ausgewählt wird, dass sie den höchsten empfangenen Signalstärkewert aufweist, wobei eine jeweilige Entfernung zwischen diesem jeweiligen Funkknoten und einem anderen Funkknoten der einen oder mehreren Funkknoten auf der Grundlage einer Pfadverlustformel und der jeweiligen Signalstärkeinformation des anderen Funkknotens bestimmt wird.

4. Das erste Verfahren nach Anspruch 3, wobei die aktualisierten Positionierungsinformationen zumindest teilweise auf der Grundlage einer Gauss-Newton-Iteration bestimmt werden.

5. Das erste Verfahren nach einem der vorhergehenden Ansprüche, wobei die Cluster-Informationen zumindest teilweise auf der Grundlage eines hierarchischen Clusterings bestimmt werden, wobei ein vordefinierter oder gemäß vordefinierten Regeln festgelegter Schwellenwert gesetzt wird, um den Mindestabstand zwischen zwei Clustern darzustellen, und wobei die Cluster-Informationen iterativ bestimmt werden.

6. Das erste Verfahren nach einem der vorhergehenden Ansprüche, wobei ein jeweiliger Standort eines jeweiligen Clusters der einen oder mehreren Cluster als Mittelwert der jeweiligen Standorte der Mehrzahl von Funkknoten festgelegt wird, die von dem jeweiligen Cluster umfasst werden oder Teil des jeweiligen Clusters sind.

7. Das erste Verfahren nach einem der vorhergehenden Ansprüche, weiterhin umfassend: Zuordnen des jeweiligen Standorts eines jeweiligen Clusters der einen oder mehreren Cluster der Cluster-Standortinformationen zu einer Veranstaltungsortinformation, die einen Bezeichner eines jeweiligen Veranstaltungsorts anzeigt, der sich an dem jeweiligen Standort des jeweiligen Clusters befindet.

8. Eine erste Vorrichtung, die dazu konfiguriert ist, das Verfahren nach einem der Ansprüche 1 bis 7 durchzuführen und/oder zu steuern oder entsprechende Mittel zum Durchführen und/oder Steuern des Verfahrens nach einem der Ansprüche 1 bis 7 umfasst.


**Revendications**

1. Une premier méthode, comprenant:

   - déterminer (201) des informations de positionnement initiales indicatives d'emplacements d'une pluralité de nœuds radio, où les informations de positionnement initiales sont déterminées au moins en partie sur la base d'une ou plusieurs informations d'empreintes digitales comprenant une pluralité d'empreintes digitales de nœuds radio;
   - déterminer (202) des informations de distance initiales indicatives d'au moins une distance estimée entre au moins deux emplacements de la pluralité de nœuds radio
   - déterminer (203) des informations de positionnement mises à jour indicatives d'emplacements respectifs mis à jour de la pluralité de nœuds radio, où les emplacements respectifs de la pluralité de nœuds radio sont mis à jour au moins en partie sur la base des informations de distance qui sont déterminées au moins en partie sur la base des informations de distance initiales, où les informations de distance sont déterminées sur la base des emplacements respectifs mis à jour de la pluralité de nœuds radio;
   - déterminer (204) des informations de grappe sur la base d'au moins une distance estimée, où au moins deux des nœuds radio situés à proximité l'un de l'autre sont déterminés d'être compris dans une grappe respective, où une pluralité de grappes sont déterminées dans le cas où plus d'une distance estimée est comprise ou représentée par les informations de distance initiales; et
   - déterminer (205) des informations de localisation de grappe indicatives d'une localisation de grappe respective d'une ou plusieurs grappes, où une grappe respective est associée à une seule zone d'intérêt, et où les informations de localisation de grappe sont à être transmises pour être utilisées dans un service de positionnement.

2. La première méthode selon la revendication 1, où les informations de localisation de grappe font partie de ou sont comprises dans une carte radio.

3. La première méthode selon l'une des revendications précédentes, où les informations de distance initiales sont déterminées sur la base d'informations d'intensité de signal d'un nœud radio respectif parmi la pluralité de nœuds radio, où les informations d'intensité de signal sont sélectionnées pour être celles ayant la valeur d'intensité de signal reçu la plus élevée, où une distance respective entre ce nœud radio respectif et un autre nœud radio parmi l'un ou plusieurs nœuds radio est déterminée sur la base d'une formule de perte de trajet et des informations d'intensité de signal respectives de l'autre nœud radio.

4. La première méthode selon la revendication 3, où les informations de positionnement mises à jour sont déterminées au moins en partie sur la base d'une itération de Gauss-Newton.

5. La première méthode selon l'une des revendications précédentes, où les informations de grappe sont déterminées au moins en partie sur la base d'un grappage hiérarchique, où une valeur seuil prédéfinie ou définie selon des règles prédéfinies est sélectionnée pour représenter la distance minimale entre deux grappes, et où les informations de grappe sont déterminées de manière itérative.

6. La première méthode selon l'une des revendications précédentes, où un emplacement respectif d'une grappe respective parmi l'un ou plusieurs grappes est défini d'être une moyenne des emplacements respectifs de la pluralité de nœuds radio composant ou faisant partie de la grappe respective.

7. La première méthode selon l'une des revendications précédentes, comprenant en outre: mettre en correspondance l'emplacement respectif d'une grappe respective parmi l'un ou plusieurs grappes des informations d'emplacement de grappe avec des informations de lieu indiquant un identifiant d'un lieu respectif situé à l'emplacement respectif de la grappe respective.

8. Un premier dispositif configuré pour exécuter et/ou contrôler ou comprenant des moyens respectifs pour exécuter et/ou contrôler la méthode de l'une des revendications 1 à 7.

Fig.1

200

201
Determining initial positioning information based at least partially on one or more fingerprint information

202
Determining distances information indicative of at least one estimated distance, wherein the distances information is determined based at least partially on the initial positioning information or updated positioning information

203
Determining updated positioning information

204
Determining cluster information based on the at least one estimated distance

205
Determining cluster location information, wherein the cluster location information is to be output for usage in a positioning service

206
Outputting cluster location information

Fig.2

300

301
Receiving or obtaining a positioning request comprising at least one fingerprint information

302
Receiving or obtaining a cluster location information

303
Determining a location of a cluster based at least partially on the at least one fingerprint information and the cluster location information

304
Determining a venue information

305
Outputting the venue information

Fig.3

460

User
Interface

470

Sensor(s)

510

Processor

411

Initial Positioning
Information Determiner

412

Distances Information
Determiner

413

Updated Positioning
Information Determiner

414

Cluster Information
Determiner

415

Cluster Location
Information Determiner

420

Working Memory

430

Program Memory

440

Data Memory

400

450

Communication
Interface(s)

Fig.4

500

560
510

User
Interface

Processor

Working Memory —520

Program Memory —530

Sensor(s)

Data Memory —540

570

511 — Location of a
Cluster Determiner

512 — Venue Information
Determiner

550 — Communication
Interface(s)

Fig.5

660

650-1

d*=20 meters

d'=70 meters

650-2

d'=d*=20 meters

650-3

650-4

50 meters

Fig.6

Fig.7

**EP 3 818 756 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016021494 A1
- US 2017272911 A